# EUROPEAN PATENT APPLICATION

(11) **EP 1 970 907 A1**
(43) Date of publication of application: **17.09.2008**
(21) Application number: 08004407.6
(22) Date of filing: 10.03.2008
(51) Int. Cl.: G11B 15/67, G11B 23/037, G11B 23/107

(54) **Tape reel, recording tape cartridge, take-up reel, drawing-out member, and drive device**

(30) Priority: 15.03.2007 JP 2007066321
(71) Applicant: FUJIFILM Corporation, Minato-ku Tokyo 106-8620 (JP)
(72) Inventor: Hideaki, Shiga, Odawara-shi Kanagawa-ken 250-0001 (JP)
(74) Representative: Grünecker, Kinkeldey, Stockmair & Schwanhäusser Anwaltssozietät

(57) **Abstract**

A tape reel, a recording tape cartridge, a take-up reel, and a drive device, in which displacement of recording tape in an axial direction of a hub may be suppressed during traveling and occurrence of reading errors of servo signals and recording/reproducing errors of data signals may be suppressed are obtained. The reel hub 22 is integrally formed with a lower flange 26 and a radius of the reel hub 22 on an upper flange 24 side is greater than a radius on a lower flange 26 side. By winding the recording tape T around the reel hub 22 in such a manner that a side having a smaller radius of curvature of a tape edge is on the lower flange 26 side of the reel hub 22, the displacement of the recording tape T in the axial direction of the reel hub 22 during traveling is suppressed. As a result, recording and reproducing errors of servo signals and recording signals may be suppressed and reduction of so-called position error signals and off-track errors may be expected even in a case of high-density recording.

## Description

### BACKGROUND OF THE INVENTION

### Technical Field

The present invention relates to a tape reel and a take-up reel wound with recording tape such as magnetic tape used as a recording and reproducing medium mainly for a computer or the like, a recording tape cartridge formed by housing the tape reel in a case, a drawing-out member for drawing the recording tape out of the tape reel in the case, and a drive device in which the recording tape cartridge is loaded.

### Related Art

Conventionally, there is a known recording tape cartridge in which recording tape such as magnetic tape used as a recording and reproducing medium for a computer or the like is wound around a reel and the single reel is housed in a case. If the recording tape cartridge is loaded into a drive device, the recording tape is drawn out through a leader member from an opening formed at the recording tape cartridge. Then, the drawn-out recording tape is wound around a take-up reel disposed on an opposite side of the recording tape cartridge while a tape guide and a recording and reproducing head are provided between the recording tape cartridge and the take-up reel.

In a recording/reproducing system (drive device) using a recent recording tape cartridge with improved recording density, a system in which a recording and reproducing head is moved upward and downward by an actuator based on servo signals recorded in advance on the recording tape and the recording and reproducing head is caused to follow the servo signals to record/reproduce data signals is dominant. Therefore, it is preferable that the recording tape drawn out of the recording tape cartridge is supported by a plurality of tape guides in the drive device and controlled to constantly travel through a predetermined position of the recording and reproducing head.

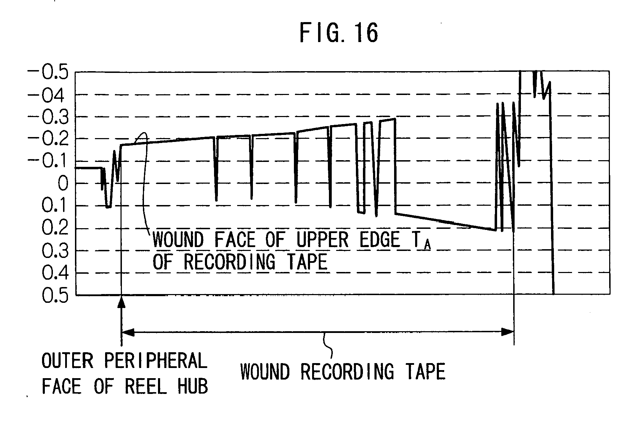

In reality, however, though the recording tape is supported by the tape guides, the tape is displaced in an axial direction (a vertical direction) of a hub during traveling, winding disorder of the wound recording tape occurs, and a one-lap-sticking-out phenomenon in which one lap of the recording tape sticks out of a wound face occurs. FIG. 16 shows states of winding disorder such as the one-lap sticking out of the recording tape from the wound face and unevenness of the wound face (Because FIG. 16 shows the wound face of an upper tape edge of the recording tape, the one-lap sticking out of the recording tape from the wound face may be seen on a lower tape edge side of the recording tape).

In a case where the winding disorder occurs in an especially short time (acceleration of traveling speed of the tape is high), the recording and reproducing head for moving upward and downward based on the servo signals on the recording tape may not follow the rapid positional displacement of the recording tape and may not record/reproduce the desired data signals.

Moreover, in a recent high-recording-density recording/reproducing system, size of the servo signals is smaller, recording density of the servo signal itself is higher, and traveling speed of the recording tape is higher. Therefore, the displacement of the recording tape of a hitherto insignificant degree may cause a recording/reproducing error of the data signal due to a reading error of the servo signal.

Japanese Patent Application Laid-open (JP-A) No. 2004-134060 discloses forming of a winding core portion (hereafter referred to as "a reel hub") with a taper angle of 0.01 1 to 0.1° and using a side of a larger hub diameter (here, an upper side of the reel hub) as a reference for traveling of the recording tape to thereby cause the recording tape to travel along an inner face of an upper flange of the reel hub.

In other words, it discloses that, if the reel hub is tapered, the recording tape is wound toward a large-diameter side of the reel hub. However, as will be described later, results of experiments performed by the present applicant raised a question as to the disclosure.

The recording tape has curvature that influences a wound position on the reel hub and this influence is greater than an influence of the taper of the reel hub in many cases. Depending on a direction of the curvature of the recording tape, the recording tape may be wound along a lower flange side in some cases. In other words, these facts suggest a possibility that the recording tape may travel along the lower flange side, though the upper flange side is used as the reference for traveling of the recording tape.

JP-A No. 2002-251859 discloses that a reel hub is deformed as a tightening force (a winding and tightening force) on the reel hub is increased due to winding of the recording tape, that an interval between upper and lower flanges gradually diminishes as the reel hub is deformed, and that winding disorder of the recording tape is prevented. However, an diminished amount of the interval between the upper and lower flanges due to deformation of the reel hub varies depending on rigidity of the reel hub. There is no description of a case where the hub is tapered.

JP-A No. 2002-251859 discloses that, as recording tape is wound, regular winding is realized by a tape reel in which a hub diameter of one end of an outer peripheral face of a reel hub is shorter than a hub diameter of the other end. In other words, an amount of taper of the reel hub increases as the recording tape is wound. However, there are normally variations in the direction and an amount of curvature of the recording tape and a traveling position and a roll shape of the recording tape on the reel hub changes due to such curvature properties. Therefore, with this tape reel, there may only increase the amount of curvature of the recording tape, facilitate damage to tape edges, and impair the regular winding.

### SUMMARY

The present invention relates to a hub having a difference between radii on its both ends and provides a tape reel, a recording tape cartridge, a take-up reel, a drawing-out member, and a drive device. With the invention, displacement of recording tape in an axial direction of the hub may be suppressed during traveling of the tape and one-lap sticking out of the wound recording tape and winding disorder are suppressed. Such problems caused by an drop impact to the recording tape as the sticking-out lap of recording tape collides with a flange and is folded or an edge of the sticking-out lap of recording tape is damaged may be reduced. Moreover, occurrence of reading errors of servo signals and recording/reproducing errors of data signals may be reduced.

According to a first aspect of the invention, there is provided a tape reel including a hub around which recording tape is wound and flanges integrally provided to opposite end portions of the hub, wherein radii on a first end and the second end of the hub are different from each other and the recording tape is wound in such a manner that the recording tape edge having a smaller radius of curvature is on a small-diameter side of the hub.

### BRIEF DESCRIPTION OF THE DRAWINGS

Embodiments of the present invention will be described in detail based on the following figures, wherein:
FIG. 1 is a schematic perspective view of a recording tape cartridge according to the present embodiment;
FIG. 2 is a schematic exploded perspective view of the recording tape cartridge according to the embodiment and viewed from above;
FIG. 3 is a schematic side sectional view of a reel according to the embodiment;
FIG. 4 is a schematic plan view showing a state of a drive device after loaded with the recording tape cartridge according to the embodiment;
FIG. 5 is a schematic side view of the drive device after loaded with the recording tape cartridge according to the embodiment;
FIG. 6A is a schematic perspective view showing a structure of a drawing-out member of a take-up reel according to the embodiment;
FIG. 6B is a schematic perspective view showing the structure of the drawing-out member of the take-up reel according to the embodiment;
FIG. 7 is a schematic side view showing servo signals of the recording tape;
FIG. 8A is an explanatory view for explaining operation of the reel according to the embodiment;
FIG. 8B is an explanatory view for explaining operation of the reel according to the embodiment;

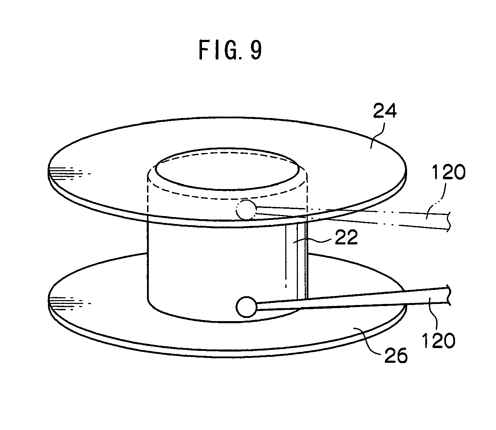

FIG. 9 is a schematic perspective view for explaining a method of measuring a radius of the reel;
FIG. 10 is a schematic perspective view showing a tape shape measuring device for measuring an amount of curvature of the recording tape;
FIG. 11A is a schematic side view for explaining operation of the tape shape measuring device;
FIG. 11B is a schematic side view for explaining the operation of the tape shape measuring device;
FIG. 12 is a schematic perspective view showing an optical measuring device used for measuring the amount of curvature of the recording tape;
FIG. 13 is a schematic plan view showing a method of measuring the amount of curvature of the recording tape and shows a positive direction of curvature (+ curvature) of the recording tape;
FIG. 14 is a plan view showing a negative direction of curvature (- curvature) of the recording tape;
FIG. 15A is data showing a roll appearance of the recording tape and shows a case where the recording tape has - curvature;
FIG. 15B is data showing a roll appearance of the recording tape and shows a case where the recording tape has + curvature;
FIG. 16 is data showing a roll appearance of the recording tape and shows a state in which the recording tape is displaced upward and downward.

### DETAILED DESCRIPTION OF THE INVENTION

Herebelow, an example of an exemplary embodiment of the present invention will be described in detail with reference to the drawings.

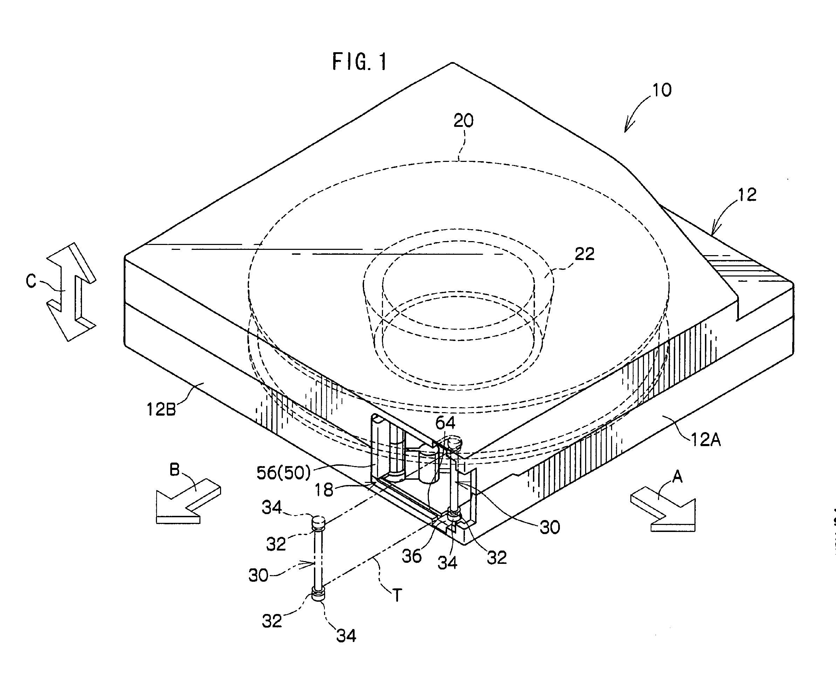

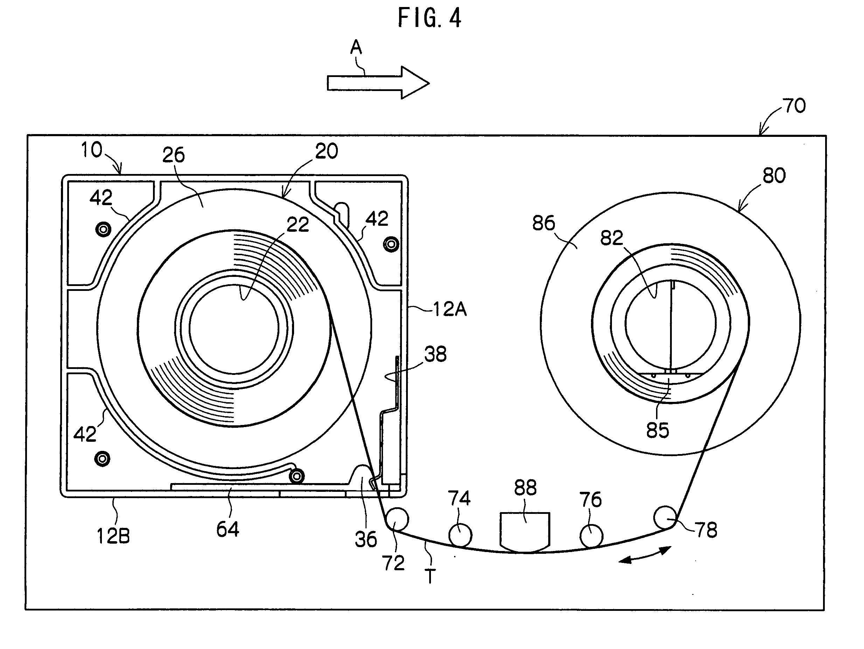

The exemplary embodiment of the invention will be described below in detail based on the examples shown in the drawings. For the convenience of explanation, a loading direction of a recording tape cartridge 10 into a drive device 70 (see FIG. 4) is shown by an arrow A in FIG. 1 and this direction is a forward direction (front side) of the recording tape cartridge 10. A direction of an arrow B orthogonal to the arrow A is a rightward direction (right side). A direction of an arrow C is a width direction in the exemplary embodiment and is the same as a height direction and a vertical direction.

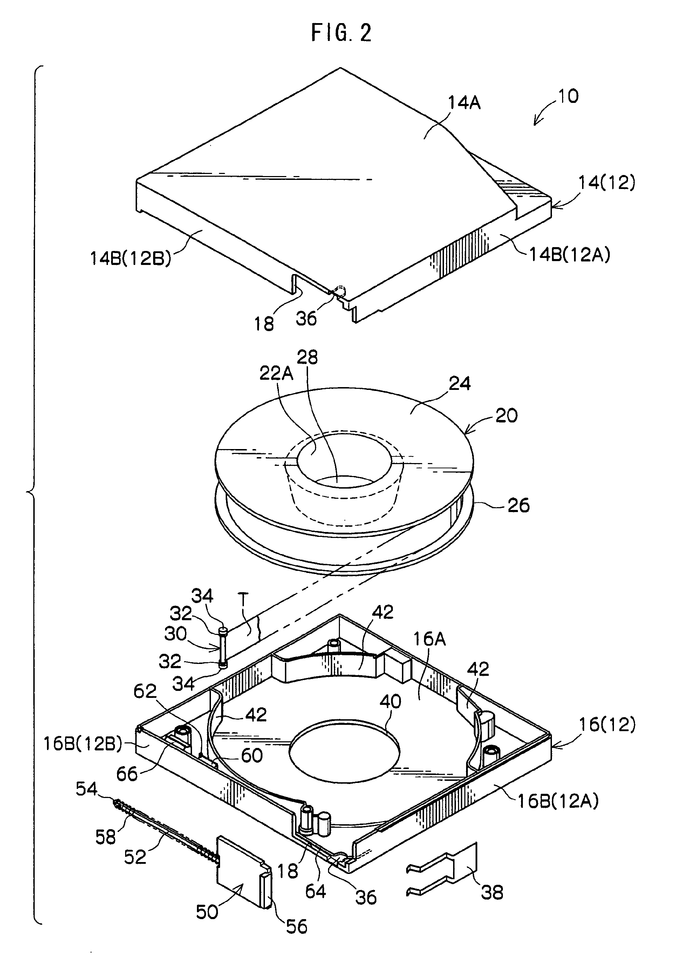

As shown in FIGS. 1 and 2, a recording tape cartridge 10 has a substantially rectangular box-shaped case 12. The case 12 is formed by joining an upper case 14 and a lower case 16 made of resin such as polycarbonate (PC) together by ultrasonic welding, screwing, or the like with a peripheral wall 14B rising from a peripheral edge of a top plate 14A and a peripheral wall 16B rising from a peripheral edge of a bottom plate 16A in contact with each other.

In the case 12, only one reel 20 is rotatably housed. A reel 20 is formed of a reel hub 22 forming an axial center portion and in a shape of a cylinder having a bottom, a lower flange 26 integrally molded with a lower end portion of the reel hub 22, and an upper flange 24 integrated with the reel hub 22 by ultrasonic welding at an upper end portion of the reel hub 22.

Recording tape T such as magnetic tape as a recording and reproducing medium is wound around an outer peripheral face of the reel hub 22 (tension; about 588 to 980 mN) and the upper flange 24 and the lower flange 26 restrict displacement of the wound recording tape T in a width direction.

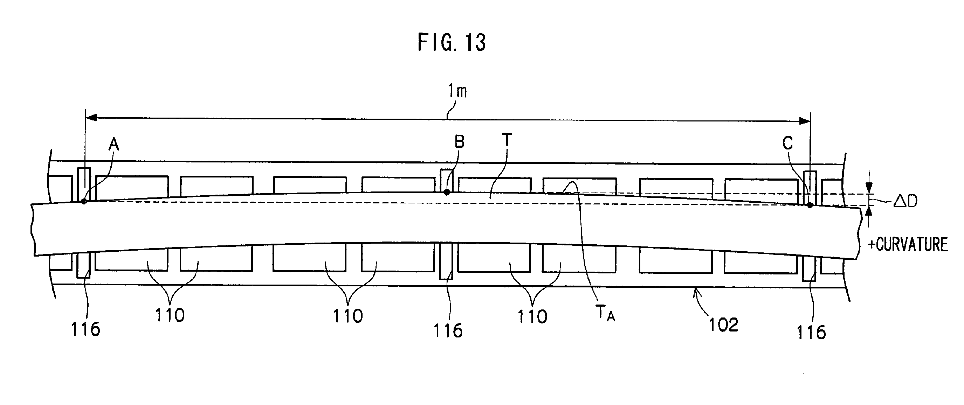

As the recording tape T, a tape is used that has a positive direction of curvature (described later) of the tape edge (has a + curvature), as shown in FIG. 13, and the amount of curvature ΔD is in a range of 0.2 mm to 2.5 mm. By the "amount of curvature" is meant the distance between a reference line, which connects opposite end portions of a 1.0 m length of the recording tape, and the mid-point of an edge of the 1.0 m long recording tape. The reference line will be described later in detail.

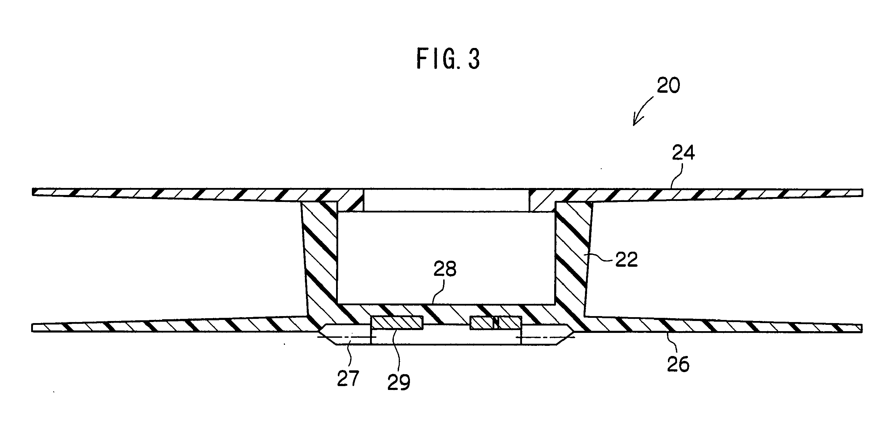

The reel hub 22 has a greater radius on the upper flange 24 side than on the lower flange 26 side in a side sectional view as shown in FIG. 3 and the greater radius is in a range of a width of the recording tape T (here, while the width is 1/2 of an inch that is approximately 12.65 mm, the difference between the radii on the upper flange 24 side and the lower flange 26 side of the reel hub 22 is 5 to 40 µm and a ratio of the difference between the radii on the upper flange 24 side and the lower flange 26 side to the width of the recording tape T is 0.0004 to 0.0032).

It is essential only that an outside shape of the reel hub 22 have different radii on the upper flange 24 side and the lower flange 26 side and therefore the outer peripheral face of the reel hub 22 need not be in a straight tapered shape in a side view. In other words, the outer peripheral face of the reel hub 22 may have fine recesses and protrusions. The outer peripheral face of the reel hub 22 may also be curved in a side view, be bent in a side view, or a part of the face may be parallel to an axis of the reel hub 22.

A reel gear 27 is formed in an annular shape on a lower face of a bottom wall 28 of the reel hub 22 and a gear opening 40 (see FIG. 2) through which the reel gear 27 is exposed outside is formed at a central portion of the lower case 16. The reel gear 27 exposed from the gear opening 40 is engaged with a drive gear (not shown) on a drive device 70 (see FIG. 4) side and driven for rotation. As a result, in the case 12, the reel 20 is rotatable with respect to the case 12.

An annular reel plate 29 (see FIG. 3) made of magnetic material is secured by insert molding or the like to the lower face of the bottom wall 28 on a radially inner side of the reel gear 27 so as to be attracted to and retained by magnetic force of the annular magnet (not shown) on the drive device 70 side. Moreover, the reel 20 is retained while prevented from rattling by free movement regulating walls 42 respectively formed to partially protrude from inner faces of the upper case 14 and the lower case 16 as inner walls on a locus of a circle that is coaxial with the gear opening 40.

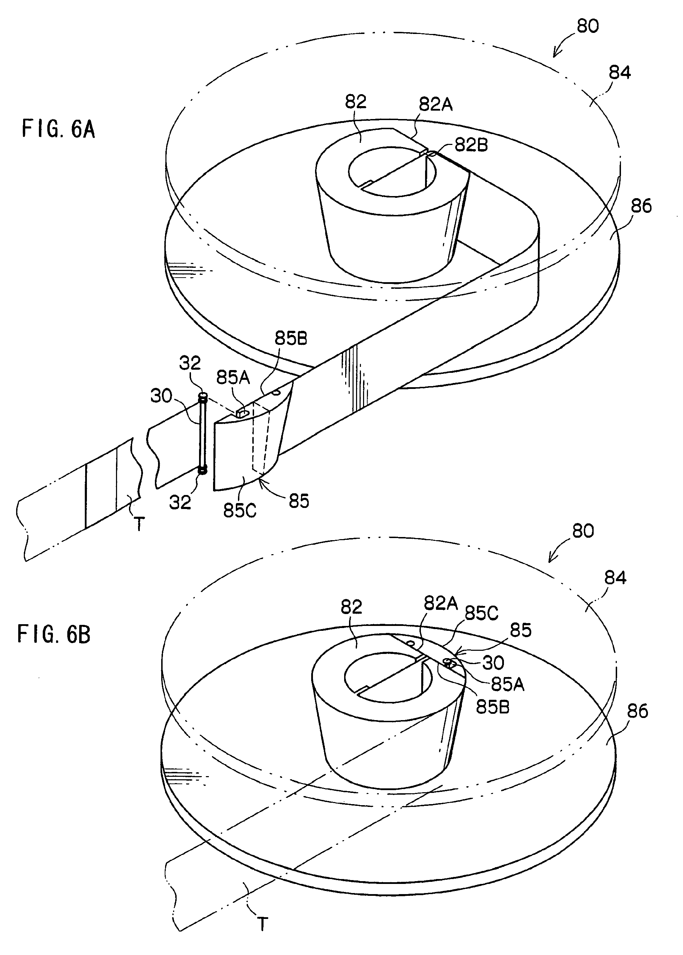

An opening 18 through which the recording tape T wound around the reel 20 is drawn out is formed in a right side wall 12B of the case 12. A leader pin 30 is secured to a free end portion of the recording tape T which is drawn out from the opening 18 while locked (grasped) by a leader block 85 (see FIG. 6(A)) that is a drawing-out member of the drive device 70 and described later.

Annular grooves 32 are formed at opposite end portions of the leader pin 30 protruding from end portions of a width of the recording tape T and the annular grooves 32 are locked to a hook 85A of the leader block 85 (see FIG. 6(B)). Therefore, the hook 85A or the like does not come in contact with the recording tape T in drawing out the recording tape T.

Inside the opening 18 of the case 12, i.e., on an inner face of the top plate 14A of the upper case 14 and an inner face of the bottom plate 16A of the lower case 16, a pair of upper and lower pin retaining portions 36 for positioning and retaining the leader pin 30 in the case 12 is formed. The pin retaining portions 36 are in substantially semicircular shapes and having open parts on a drawing-out side of the recording tape T and opposite end portions 34 of the upright leader pin 30 may come into and go out of the pin retaining portions 36 from the open parts.

In a vicinity of the pin retaining portions 36, a leaf spring 38 is fixed and disposed. Bifurcate tip end portions of the leaf spring 38 are respectively engaged with the upper and lower opposite end portions 34 of the leader pin 30 to retain the leader pin 30 in the pin retaining portions 36. When the leader pin 30 comes into and goes out of the pin retaining portions 36, the tip end portions of the leaf spring 38 are properly and elastically deformed to allow movement of the leader pin 30.

The opening 18 is opened and closed with a door 50. The door 50 is formed in a shape of a substantially rectangular plate of such a size as to be able to close the opening 18. Groove portions 64 in which upper and lower end portions of the door 50 are fitted for sliding along the right side wall 12B are formed in the top plate 14A and the bottom plate 16A.

A shaft 52 is provided to protrude from a center of a rear end portion of the door 50 and a coil spring 58 is fitted over the shaft 52. A flared portion 54 for preventing slipping off of the coil spring 58 is formed at a rear end of the shaft 52. A support table 60 having a locking portion 62 for locking a rear end of the coil spring 58 fitted over the shaft 52 is provided to protrude from the lower case 16.

Therefore, the door 50 is constantly biased in a closing direction of the opening 18 with biasing force of the coil spring 58, because the shaft 52 is slidably supported at the support table 60 and the rear end of the coil spring 58 is locked by the locking portion 62. It is preferable to further provide a support table 66 protruding on a rear side of the support table 60 to support the shaft 52 in opening of the opening 18.

A protruding portion 56 for opening and closing operations is formed to protrude outward from a front end portion of the door 50. The protruding portion 56 is engaged with an opening and closing member (not shown) of the drive device 70 when the recording tape cartridge 10 is loaded in the drive device 70. As a result, the door 50 is opened against the biasing force of the coil spring 58.

An example of the drive device 70 in which the recording tape cartridge 10 is loaded will be described.

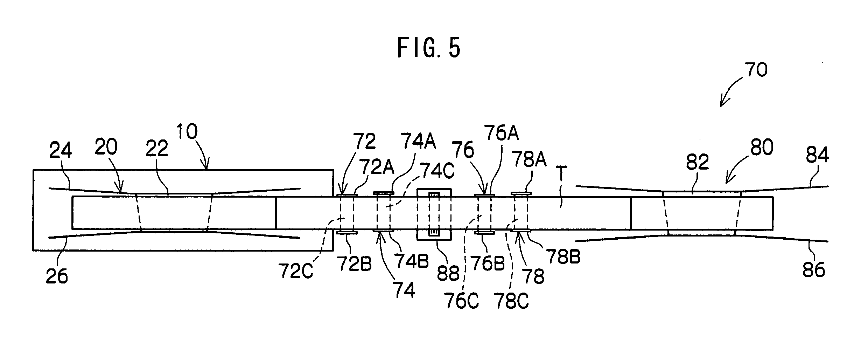

As shown in FIGS. 4 and 5, the drive device 70 has a take-up reel 80 which houses the leader block 85 grasping the leader pin 30 of the recording tape cartridge 10 and around which the recording tape T drawn out through the leader pin 30 is wound.

The take-up reel 80 is made of a reel hub 82 forming an axial center portion and in a shape of a cylinder with a bottom, a lower flange 86 integrally molded with a lower end portion of the reel hub 82, and an upper flange 84 screwed to an upper end portion of the reel hub 82 through a metal retainer plate (not shown) similarly to the reel hub 22 of the reel 20.

A radius of the reel hub 82 is greater on the upper flange 84 side than on the lower flange 86 side. A difference between radii on the upper flange 84 side and the lower flange 86 side of the reel hub 82 is in a range of 5 to 40 µm (a ratio of the difference between the radii on the upper flange 84 side and the lower flange 86 side of the reel hub 82 to the width of the recording tape T is 0.0004 to 0.0032).

The reel hub 82 of the take-up reel 80 is provided with the leader block 85 for grasping the leader pin 30 and in an arc shape in a plan view in such a manner that the leader block 85 may be attached to and detached from (may be housed in) the reel hub 82 as shown in FIGS. 6A and 6B. In a height direction (an axial direction of the reel hub 82) of a flat face 82A of the reel hub 82 that is exposed when the leader block 85 is detached, a slit portion 82B for accepting leader tape 87 attached to one end portion of the leader block 85 is formed.

The leader block 85 is mounted to the reel hub 82 in a state in which the flat face 85B of the leader block 85 faces the flat face 82A of the reel hub 82 and the leader block 85 forms a part of an outer peripheral face (winding face) of the reel hub 82. An arc face (winding face) 85C of the leader block 85 needs to be in a similar shape to the outer peripheral face of the reel hub 82.

The leader block 85 forms a part of the winding face of the reel hub 82 when it is mounted to the reel hub 82. Therefore, if a difference in level is created between the arc face 85C of the leader block 85 and the outer peripheral face of the reel hub 82, deformation of the recording tape T is caused by the difference in level when the recording tape T is wound around the reel hub 82 and there is a possibility that data may not be recorded or read at the portion.

Therefore, if the arc face 85C of the leader block 85 is in the similar shape to the outer peripheral face of the reel hub 82, the arc face 85C of the leader block 85 and the outer peripheral face of the reel hub 82 become substantially flush with each other when the leader block 85 is mounted to the reel hub 82 to avoid difference in level throughout the outer peripheral face of the reel hub 82.

As shown in FIG. 5, the drive device 70 is provided with a plurality of tape guides 72, 74, 76, and 78 (here, provided with four tape guides). The tape guides 72 to 78 are in shapes in which upper flanges 72A to 78A and lower flanges 72B to 78B are respectively provided to opposite end portions of cylindrical hubs 72C to 78C and regulate a vertical position (in an axial direction of the hubs 72A to 78A) of the recording tape T drawn out of the recording tape cartridge 10 loaded in the drive device 70. Between the tape guide 74 and the tape guide 76, a recording and reproducing head 88 is disposed. The recording and reproducing head 88 performs recording and reproduction of information on the recording tape T.

Operation of the recording tape cartridge 10 and the drive device 70 having the above-described structure will be described.

In the recording tape cartridge 10 having the above-described structure, the opening 18 is closed with the door 50 when the cartridge 10 is not loaded in the drive device 70 (see FIG. 4) and is not used (during storage or transportation) as shown in FIG. 1. When the recording tape T is used, the recording tape cartridge 10 is loaded into the drive device 70 along the direction of the arrow A with a front wall 12A in the lead.

Then, the recording tape cartridge 10 is inserted into a bucket (not shown) and the opening and closing member (not shown) provided to the bucket (drive device 70 side) is engaged with the protruding portion 56 of the door 50. In this state, if the recording tape cartridge 10 further moves in the direction of the arrow A, the opening and closing member moves the protruding portion 56 relatively rearward against the biasing force of the coil spring 58. Then, the door 50 provided with the protruding portion 56 slides rearward in the groove portions 64 along the right wall 12B to open the opening 18.

When the recording tape cartridge 10 has been loaded into the drive device 70 (bucket) to a predetermined depth and the opening 18 has been completely opened, the bucket in which the recording tape cartridge 10 is housed moves down through a predetermined distance and a positioning member (not shown) of the drive device 70 is relatively inserted into a hole portion (not shown) for positioning and formed in the lower case 16. In this way, the recording tape cartridge 10 is accurately positioned in a predetermined position in the drive device 70 and further sliding (rearward movement) of the door 50 is restricted.

As a result of the downward movement of the recording tape cartridge 10 (bucket), the drive gear (not shown) relatively enters from the gear opening 40 (see FIG. 2), becomes engaged with the reel gear 27 (see FIG. 3), and moves the reel 20 up to a predetermined height (see FIG. 5). Then, in a state in which the drive gear and the reel gear 27 are completely engaged with each other, the reel plate 29 is attracted to and retained by the magnetic force of the annular magnet (not shown) provided inside the drive gear. As a result, the reel 20 is brought into an unlocked state in which it is rotatable with respect to the case 12 while the reel gear 27 is kept engaged with the drive gear.

The leader block 85 provided to the drive device 70 enters from the opening 18 into the case 12 and grasps and draws out the leader pin 30 positioned and retained at the pin retaining portions 36. At this time, because the recording tape cartridge 10 is accurately positioned in the drive device 70, the hook 85A of the leader block 85 may be reliably locked to the annular grooves 32 of the leader pin 30. Because rotation of the reel 20 is unlocked, the reel 20 may rotate as the leader pin 30 is drawn out.

The leader block 85 grasping the leader pin 30 is drawn out from the opening 18 and is mounted to the reel hub 82 in such a manner as to form a part of the reel hub 82 as a result of rotation of the take-up reel 80 as shown in FIGS. 6A and 6B. Then, by synchronously driving the take-up reel 80 and the reel 20 for rotation, the recording tape T is successively drawn out of the case 12 while wound around the take-up reel 80.

At this time, as shown in FIGS. 4 and 5, the recording tape T drawn out of the case 12 comes in sliding contact with the tape guide 72 that is the closest to the recording tape cartridge 10. The tape guide 72 is supported for rotation and is mounted in such a manner that its height position is at a central position of a width (height) of the reel hub 22 or deviates from the central position to an upper or lower side, e.g., the lower side.

Therefore, the recording tape T in sliding contact with the tape guide 72 travels while a position of an upper edge of the tape T is regulated by the upper flange 72A of the tape guide 72 and then comes in sliding contact with the tape guide 74. The tape guide 74 is mounted in such a manner that a central position of its width (height) deviates from the central position of the width (height) of the reel hub 22 to an upper side and the lower flange 74B regulates a position of a lower edge of the recording tape T.

The recording tape T the position of which has been regulated by the tape guide 74 next comes in sliding contact with the tape guide 76. Before the recording tape T comes in sliding contact with the tape guide 76, it comes in sliding contact with the recording and reproducing head 88. The tape guide 76 is mounted in such a manner that a central position of its width (height) deviates from the central position of an axis (height) of the reel hub 22 to a lower position in contrast to the tape guide 74, i.e., similarly to the tape guide 72 and the upper flange 76A regulates the position of the upper edge of the recording tape T.

The recording tape T the position of which has been regulated by the tape guide 76 finally comes in sliding contact with the tape guide 78. The tape guide 78 is mounted in such a manner that a central position of its width (height) deviates from the central position of the axis (height) of the reel hub 22 to an upper position similarly to the tape guide 74 and the lower flange 78B regulates the position of the lower edge of the recording tape T.

Since the height positions (positions in the width direction) of the respective tape guides 72 to 78 in the drive device 70 are alternately different along a tape path of the recording tape T in the above manner, there is an advantage that the position of the recording tape T in the width direction (vertical direction) may be regulated satisfactorily.

The leader pin 30 is housed in the reel hub 82 of the take-up reel 80 while the position of the recording tape T in the width direction (vertical direction) is regulated by the tape guides 72 to 78, the take-up reel 80 and the reel 20 are synchronously driven for rotation. As a result, the recording tape T is successively drawn out of the case 12 while wound by the take-up reel 80 and the recording and reproducing head 88 disposed between the predetermined tape guides 74 and 76 carries out recording and reproduction of information.

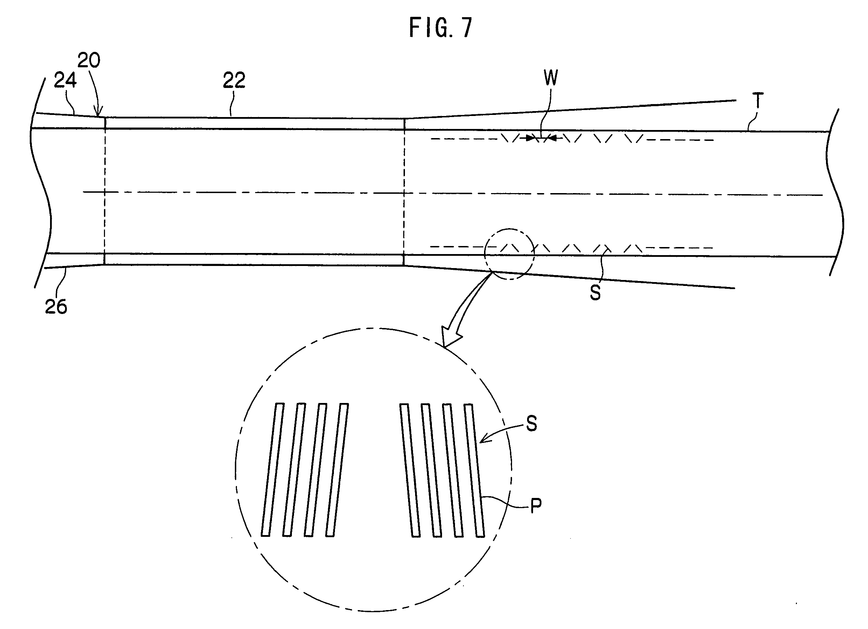

Here, the recording and reproducing head 88 is supported by an actuator (not shown) to be movable in the vertical direction (height direction) following servo signals S (see FIG. 7) provided on the recording tape T and described later.

In a set of servo signal S, four (or five) patterns P arranged parallel form a substantially V shape and plural sets of substantially V-shaped servo signal S are disposed in a row in a vicinity of each of upper and lower end portions of the recording tape T with their wide-open sides located on an outer side, for example, as shown in FIG. 7.

With the servo signals S, if a detection time (distance) of the set of servo signal S (indicated by W in FIG. 7) becomes longer, it is apparent that the position of the traveling recording tape T is deviating to the upper or lower position with respect to the recording and reproducing head 88, based on which the position of the recording and reproducing head 88 in the vertical direction (height direction) may be adjusted.

The recording tape T on which recording or reproduction of information has been completed without error by coming in sliding contact with the recording and reproducing head 88 while the height position (position in the width direction) of the tape T is regulated by the respective tape guides 72 to 78 is rewound about the reel 20 by reverse rotation of the drive gear and the take-up reel 80.

When the recording tape T is rewound around the reel 20 to the end and the leader pin 30 is retained by the pin retaining portions 36, the bucket in which the recording tape cartridge 10 is housed moves up through a predetermined distance, the positioning member (not shown) is withdrawn from the hole portion (not shown) for positioning, the drive gear is withdrawn from the gear opening 40, and the drive gear is disengaged from the reel gear 27. Then, the reel 20 moves down to the original height.

Then, the recording tape cartridge 10 is moved in an opposite direction to the direction of the arrow A by an eject mechanism (not shown). As a result of this movement, the door 50 slides in the closing direction of the opening 18 due to the biasing force of the coil spring 58 to completely close the opening 18 (returns to an initial state). The recording tape cartridge 10 the opening 18 of which has been closed is completely ejected from the drive device 70 (bucket).

Next, operation of the reel 20 according to the exemplary embodiment of the invention will be described.

In the exemplary embodiment, as shown in FIG. 3, the reel hub 22 and the lower flange 26 are integrally molded and the radius on the upper flange 24 side is greater than the radius on the lower flange 26 side in the reel 20. The width of the recording tape T is 1/2 of an inch that is approximately 12.65 mm and the difference between the radii on the upper flange 24 side and the lower flange 26 side of the reel hub 22 is in a range of 5 to 40 µm. The ratio of the difference between the radii on the upper flange 24 side and the lower flange 26 side of the reel hub 22 to the width of the recording tape T is 0.0004 to 0.0032.

As shown in FIG. 5, the reel hub 82 and the lower flange 86 are integrally molded and the radius on the upper flange 84 side is greater than the radius on the lower flange 86 side in the take-up reel 80 similarly to the reel 20. The difference between the radii on the upper flange 84 side and the lower flange 86 side of the reel hub 82 is in the range of 5 to 40 µm with respect to the width of the recording tape T (the ratio of the difference between the radii on the upper flange 84 side and the lower flange 86 side of the reel hub 82 to the width of the recording tape T is 0.0004 to 0.0032). Because effects of the take-up reel 80 are substantially similar to those of the reel 20 and therefore description of the take-up reel 80 will be omitted in the following description.

In the exemplary embodiment, the recording tape T in which curvature of a tape edge to be wound on the reel hub 22 is in positive direction (+ curvature; see FIG. 13), i.e., the recording tape T having a smaller radius of curvature of the tape edge on the lower flange 26 side is used (described later).

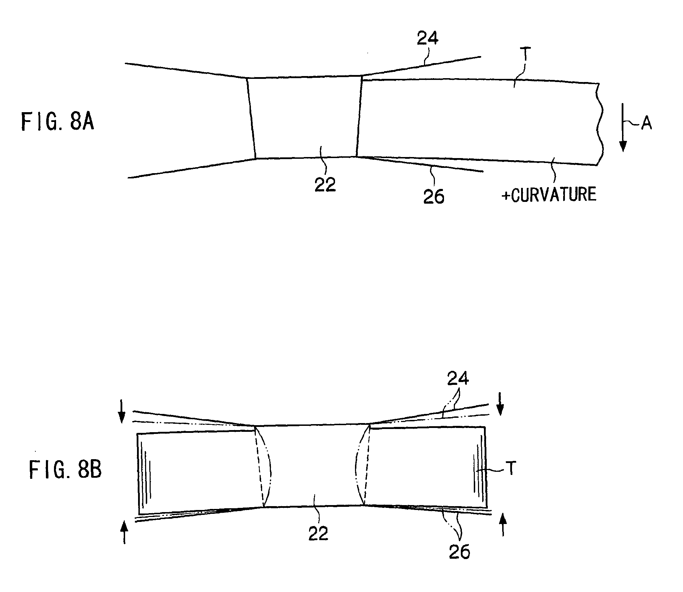

According to experiments performed by the present applicant, if there is a difference between the radii on the opposite end portions of the reel hub, and the flange and the reel hub are formed integrally, it has been shown that the recording tape tends to be wound toward the small-diameter side of the reel hub. In the exemplary embodiment, by integrally molding the lower flange 26 and the reel hub 22 and welding the upper flange 24 to the reel hub 22, the reel hub 22, the upper flange 24, and the lower flange 26 are integrated. In this case, if the reel hub 22 is deformed (as shown in two-dot chain phantom lines) due to winding and tightening of the recording tape T as shown in FIG. 8B, the upper flange 24 and the lower flange 26 are affected and an interval between the upper flange 24 and the lower flange 26 is reduced.

Here, "to be integral" refers to a structure in which deformations of the reel hub 22, the upper flange 24, and the lower flange 26 occur synchronously and affect each other. In other words, in such a structure, the upper flange 24 and the lower flange 26 are deformed as the reel hub 22 is deformed, or the reel hub 22 is deformed as the upper flange 24 and the lower flange 26 are deformed.

Therefore, in addition to the case in the exemplary embodiment where the reel hub 22, the upper flange 24, and the lower flange 26 are integrated by integrally molding the lower flange 26 and the reel hub 22 and welding the upper flange 24 to the reel hub 22, there are a case where the reel hub 22, the upper flange 24, and the lower flange 26 are integrally molded and a case where the upper flange 24 and the lower flange 26 are respectively welded to the reel hub 22.

As described above, in the reel hub 22 integrated with the upper flange 24 and the lower flange 26 and having the greater radius on the upper flange 24 than the radius on the lower flange 26 side,
1)Because surface pressure distribution of the reel hub 22 is greater on the upper flange 24 side than on the lower flange 26 side of the reel hub 22, an amount of deformation of the flange deformed due to winding and tightening of the recording tape T is larger on the upper flange 24 side than on the lower flange 26 side as shown in FIG. 8B and the recording tape T is wound while deviating to the small-diameter side of the reel hub 22, i.e., the lower flange 26 side. FIG. 8(B) is a conceptual rendering and the amounts of deformation of the reel hub 22, the upper flange 24, and the lower flange 26 are exaggerated as compared with actual amounts to be easy to understand. Here, solid lines show a state before the deformation and the two-dot chain phantom lines show a state after the deformation.
2)If the recording tape T is wound while applied with tension in a direction substantially perpendicular to the axis of the reel hub 22, the recording tape T is wound while deviating toward the lower flange 26 side of the reel hub 22 due to deviation of the distribution of the surface pressure acting on the recording tape T.
3)If the recording tape T is wound around the reel hub 22 in such a manner that the side having the smaller radius of curvature of the tape edge of the recording tape T is on the lower flange 26 side of the reel hub 22 as shown in FIG. 8A, a direction of movement of the recording tape T (a direction of an arrow A) is a direction toward the lower flange 26 of the hub.
   In other words, according to the exemplary embodiment, the recording tape T may be wound on the lower flange 26 side due to synergy among 1) to 3).

Therefore, displacement of the recording tape T in the axial direction of the reel hub 22 may be suppressed, winding disorder of the recording tape T may be suppressed, and the regular winding may be realized. As a result, occurrence of sticking out of one lap or a plurality of laps of the recording tape T from the wound face of the tape T wound around the reel hub 22 and unevenness may be suppressed. Problems, caused by an drop impact to the tape cartridge, the sticking-out lap collides with the upper flange 24 or the lower flange 26 and is folded or the tape edge of the sticking-out lap is damaged may be reduced. Therefore, servo tracking error that occurs during traveling of the tape may be reduced and recording and reproducing errors of information may be prevented.

Moreover, positional displacement of the recording tape T in the vertical direction (axial direction of the reel hub 22) may be suppressed during traveling of the recording tape T in the drive device 70 and the tape traveling position may be stabilized. Therefore, errors in reading the servo signals S (see FIG. 7) and recording and reproducing recording signals may be reduced even in a case of high-density recording. Accordingly, reduction of so-called position error signals and off-track errors may be expected.

In the exemplary embodiment, the difference between radii on the upper flange 24 side and the lower flange 26 side of the reel hub 22 is in the range of 5 to 40 µm while the width of the recording tape T is around a half inch (12.65 mm). The ratio of the difference between the radii on the upper flange 24 side and the lower flange 26 side of the reel hub 22 to the width of the recording tape T is 0.0004 to 0.0032.

Here, a method of measurement of the radius of the reel hub 22 will be described. In a state in which the reel 20 is set on a master chucking gear (high-precision reference gear) (not shown) with a chucking portion (the reel gear 27; see FIG. 3) of the reel 20 for the drive device 70 (see FIG. 4) on a lower side, an outside shape of the reel hub 22 is measured from its lower end portion side to its upper end portion side with a touch-sensitive probe 90 of a contact type three-dimensional measuring machine.

At this time, a provisional center (axis) used in measuring the radius of the reel hub 22 is a center (axis) of the master chucking gear. Because the touch-sensitive probe 90 having a diameter of 1 mm is used, positions of an upper end and a lower end of measurement are set so that a central position of the touch-sensitive probe 90 is at distances of 0.7 mm to 1.0 mm respectively from the upper end portion and the lower end portion of the reel hub 22 in measurement so as to prevent the probe 90 from interfering with the upper flange 24 or the lower flange 26. Then, at least ten or more measurement points in total are set at substantially equal intervals in the axial direction of the reel hub 22. This measurement is carried out in the same way at 6 positions at intervals of 60° around a circumference of the reel hub 22..

From the results, the difference ΔR=ΔRmax-(ΔRmax-ΔRmin)/2=(ΔRmax+ΔRmin)/2 between the radii on the upper flange 24 side and the lower flange 26 side of the reel hub 22 is calculated. ΔRmax is the greatest value out of ΔR1 to ΔR6 and ΔRmin is the smallest value out of ΔR1 to ΔR6. Each of ΔR1 to ΔR6 is a radius value of a large-diameter side (upper flange 24 side)- a radius value of a small-diameter side (lower flange 26 side (n=1 to 6) of the reel hub at each of six positions at intervals of 60°. R1max to R6max are the greatest values out of radius values of the reel hub 22 at the six positions at intervals of 60° measured by the above method.

Table 1 shows evaluation of "the difference between the radii on the upper flange side and the lower flange side of the reel hub", grade of roll appearance of the recording tape T, and damage to the tape edges. The ratio of the radii difference between the upper flange side and the lower flange side of the reel hub to the width of the recording tape T (1/2 of an inch that is approximately 12.65 mm) is also indicated in columns to the right of columns showing "the difference between the radii on the upper flange side and the lower flange side of the reel hub".

**[Table 1]**

| Examples | Difference between radii on upper flange side and lower flange side of reel hub (mm) | Ratio of difference between radii on upper flange side and lower flange side of reel hub to tape width | Grade of roll appearance* | Damage to tape edges* |
|---|---|---|---|---|
| 1 | 0.045 | 0.0036 | × to Δ | × |
| 2 | 0.040 | 0.0032 | ⊚ | ○ |
| 3 | 0.035 | 0.0028 | ⊚ | ○ |
| 4 | 0.030 | 0.0024 | ⊚ | ○ |
| 5 | 0.025 | 0.0020 | ⊚ | ⊚ |
| 6 | 0.020 | 0.0016 | ⊚ | ⊚ |
| 7 | 0.015 | 0.0012 | ⊚ | ⊚ |
| 8 | 0.010 | 0.0008 | ⊚ | ⊚ |
| 9 | 0.005 | 0.0004 | ○ | ⊚ |
| 10 | 0.003 | 0.0002 | × to Δ | ⊚ |

| | | | | |
|---|---|---|---|---|
| *⊚ : Excellent ○ : Good Δ : Somewhat Good × : Poor | | | | |

As is apparent from the results in Table 1, if the difference between the radii on the upper flange 24 side and the lower flange 26 side of the reel hub 22 was less than 5 µm with respect to the width of the recording tape T (1/2 of an inch that is approximately 12.65 mm) and the ratio of the difference between the radii on the upper flange 24 side and the lower flange 26 side of the reel hub 22 to the width of the recording tape T was less than 0.0004, the roll appearance was unsatisfactory and damage was found on the tape edges. In other words, it is conceivable that the effect of moving the recording tape T to be wound to the small-diameter side of the reel hub 22 was not obtained.

[0078] Moreover if the difference between the radii on the upper flange 24 side and the lower flange 26 side of the reel hub 22 with respect to the width of the recording tape T was more than 40 µm (the ratio of the difference between the radii on the upper flange 24 side and the lower flange 26 side of the reel hub 22 to the width of the recording tape T was more than 0.0032), the roll appearance was unsatisfactory and damage to the tape edges was found.

If the difference between the radii on the upper flange 24 side and the lower flange 26 side of the reel hub 22 is too large, the recording tape T is excessively pushed to the lower flange 26 side to cause damage to the tape edge and the recording tape T may be wound unevenly in the radial direction of the flange, the recording tape T interferes with the upper flange 24 and the lower flange 26 during traveling of the tape and suffers damage on its edges, and also phenomena which develop into defects such as cinching may occur.

Therefore, in the exemplary embodiment, the difference between the radii on the upper flange 24 side and the lower flange 26 side of the reel hub 22 is in a range of 5 to 40 µm with respect to the width of the recording tape T. In other words, the ratio of the difference between the radii on the upper flange 24 side and the lower flange 26 side of the reel hub 22 to the width of the recording tape T is in a range of 0.0004 to 0.0032.

It is preferable that the difference between the radii on the upper flange 24 side and the lower flange 26 side of the reel hub 22 is in a range of 10 to 25 µm with respect to the width of the recording tape T (the ratio of the difference between the radii on the upper flange 24 side and the lower flange 26 side of the reel hub 22 to the width of the recording tape T is 0.0008 to 0.0020).

If the difference between the radii on the upper flange 24 side and the lower flange 26 side of the reel hub 22 is in a range of 10 to 25 µm with respect to the width of the recording tape T (the ratio of the difference between the radii on the upper flange 24 side and the lower flange 26 side of the reel hub 22 to the width of the recording tape T is 0.0008 to 0.0020), the recording tape T is not excessively pushed against the inner face of the lower flange 26 of the reel hub 22 or does not interfere with the lower flange 26 and the recording tape T may be wound around the reel hub 22 while the tape edge of the recording tape T deviates to a proper degree to the lower flange 26 side even if the above-described radius of curvature of the tape edge of the recording tape T is small, this means an amount of curvature of the recording tape T is large.

Therefore, if the radius of curvature of the tape edge of the recording tape T is large (the amount of curvature of the recording tape T is small), the difference between the radii on the upper flange 24 side and the lower flange 26 side of the reel hub 22 in the range of 5 to 40 µm with respect to the width of the recording tape T (the ratio of the difference between the radii on the upper flange 24 side and the lower flange 26 side of the reel hub 22 to the width of the recording tape T in the range of 0.0004 to 0.0032) sufficiently works from viewpoints of productivity of the reel 20 and a degree of freedom in design.

Furthermore, in the exemplary embodiment, the amount ΔD of curvature of the recording tape T (see FIG. 13) is set in a range of 0.2 mm to 2.5 mm.

Here, a method of measuring the amount of curvature of the recording tape T will be described.

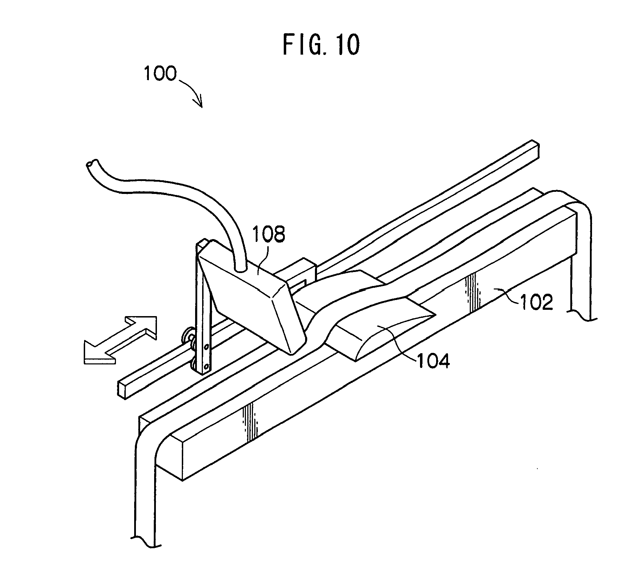

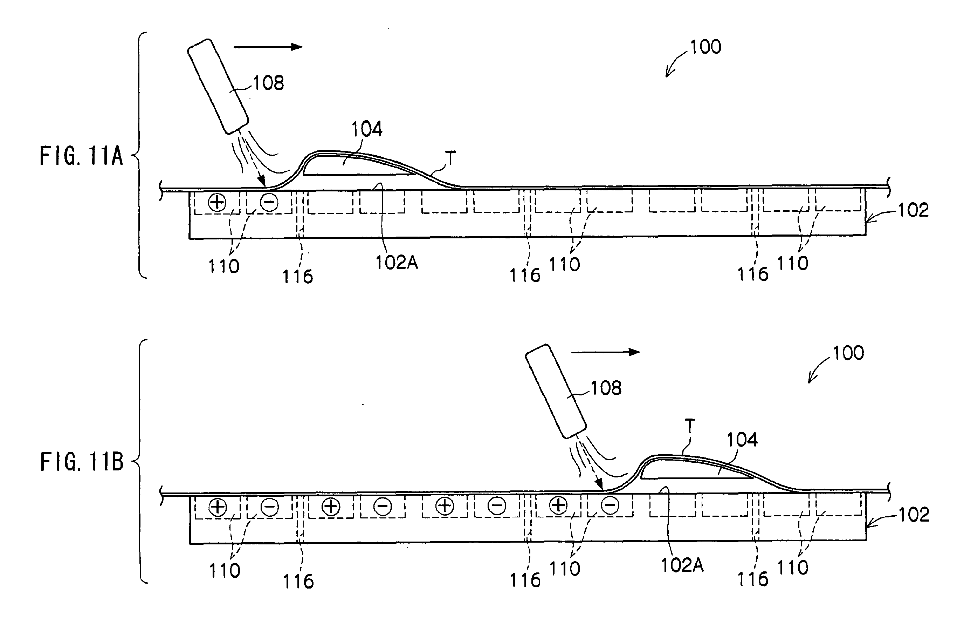

FIG. 10 shows a tape shape measuring device 100. The tape shape measuring device 100 includes an electrostatic adsorption table 102 substantially in a shape of a rectangular parallelepiped and a guide member 104 is provided above the electrostatic adsorption table 102. The guide member 104 may move horizontally above the electrostatic adsorption table 102 along a longitudinal direction of the electrostatic adsorption table 102 while leaving a space between an upper face (adsorption face 102A) of the electrostatic adsorption table 102 and the guide member 104 as shown in FIGS. 11(A) and 11(B). The recording tape T cut in advance to a length that is the sum of specified 1 m and margins on opposite ends is disposed on the adsorption face 102A of the electrostatic adsorption table 102 while covering an upper face of the guide member 104. The opposite ends of the recording tape T are free while provided with margins of length and a nozzle 108 blows air on the recording tape T.

While air is blown on the recording tape T, the guide member 104 and the nozzle 108 slide at a predetermined speed along the adsorption face 102A. As a result, the recording tape T is temporarily separated upward from the adsorption face 102A and guided again onto the adsorption face 102A in a state in which the excess tension has been removed.

A plurality of pairs 110 of electrodes are disposed along the longitudinal direction of the electrostatic adsorption table 102 and switches of the pairs 110 of electrodes corresponding to the recording tape T guided onto the adsorption face 102A are actuated in order when the recording tape T is guided onto the adsorption face 102A and the adsorption face 102A is successively electrified in response to guiding of the recording tape T. As a result, the recording tape T is electrostatically charged and successively adsorbed to the adsorption face 102A due to electrostatic adsorption.

Moreover, air blown from the nozzle 108 presses the adsorbed recording tape T with a predetermined pressure. In this way, air accompanying and interposed between the adsorption face 102A and a lower face of the recording tape T is pushed out. As a result, the recording tape T may be satisfactorily brought in close contact with the adsorption face 102A.

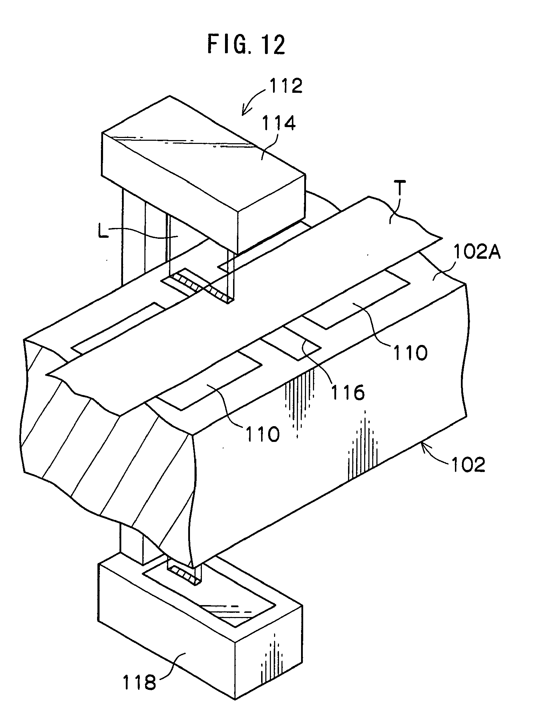

Next, the shape of the recording tape T adsorbed to the adsorption face 102A is measured by an optical measuring device 112 shown in FIG. 12. The electrostatic adsorption table 102 is provided with transparent portions 116 through each of which a laser L applied from a laser generator 114 of the optical measuring device 112 may pass through, the laser L is applied to the transparent portion 116 in a state in which the recording tape T is adsorbed to the adsorption face 102A, and a laser receiver 118 disposed below the electrostatic adsorption table 102 receives the laser L that has passed through the portion 116. In this way, a position of the edge of the recording tape T may be measured.

As shown in FIG. 13, the lasers L which are band-shaped in the width direction of the recording tape T are respectively applied from the laser generators 114 (see FIG. 12) respectively disposed above measurement points A, B, and C astride a reference line AC connecting the measurement points A and C. Then, as shown in FIG. 12, the laser receivers 118 respectively disposed below the electrostatic adsorption table 102, i.e., below the measurement points A, B, and C respectively receive the lasers L which have passed through the respective transparent portions 116. At this time, if the recording tape T has curvature, an amount of the received laser L (a length in the width direction of the laser L that has passed through the portion 116) that is band-shaped in the width direction is small.

Then, by detecting lengths in the width direction of the lasers L which have passed through the portions 116 with the laser receivers 118, positions of the measurement points A, B, and C (a position of an upper edge T_{A}) are obtained. Then, based on the positions of the measurement points A, B, and C, a distance between the reference line AC and the measurement point B, i.e., displacement (ΔD) is calculated and the calculated value becomes an amount of curvature at the measurement point B. JISX6175 specifies that the length of the reference line AC is 1.0 m.

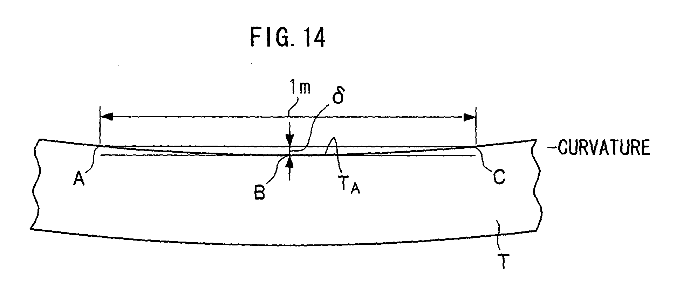

As shown in FIG. 13, if the smaller radius of curvature of the tape edge of the recording tape T is on the lower side in the drawing, i.e., if the reference line AC is covered with the recording tape T, the recording tape T has a positive direction of curvature. On the other hand, as shown in FIG. 14 (FIG. 14 is a simplified version of FIG. 13), if the smaller radius of curvature of the tape edge of the recording tape T is on the upper side in the drawing, i.e., a clearance δ is created between the reference line AC and the upper tape edge of the recording tape T, i.e., the upper edge T_{A}, the recording tape T has a negative direction of curvature. In a state in which the recording tape T is wound around the reel hub 22, the upper edge T_{A} side is on the upper flange 24 side of the reel hub 22.

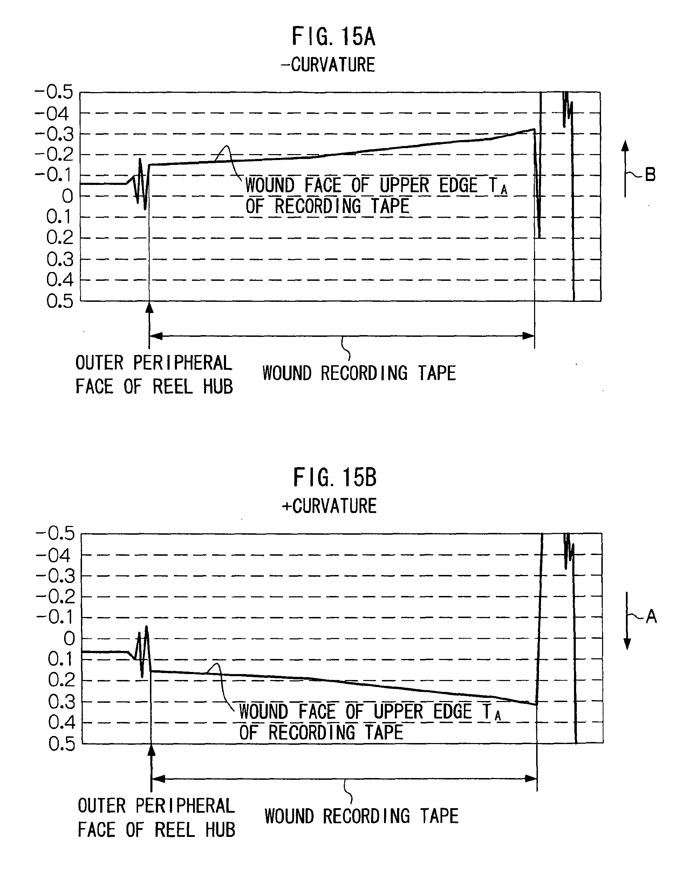

Here, FIGS. 15A and 15B show positions of the upper edge T_{A} (see FIG. 13) of the wound recording tape T. FIGS. 15A and 15B show sectional views in the vertical direction of the reel hub 22 of every upper edge T_{A} of the recording tape T which is wound around the reel hub 22. In a case where the curvature of the recording tape T is in the positive direction (+ curvature), the recording tape T moves in a direction of an arrow A along the axial direction of the reel hub 22 as the tape T is wound as shown in FIG. 15B. In other words, the recording tape T moves toward the lower flange 26.

On the other hand, in a case where the curvature of the recording tape T is in the negative direction (- direction), the recording tape T moves in a direction of an arrow B along the axial direction of the reel hub 22 as the tape T is wound as shown in FIG. 15A. In other words, the recording tape T moves toward the upper flange 24.

In this way, the direction of movement of the recording tape T changes depending on the direction of curvature of the recording tape T.

If the amount of curvature ΔD of the recording tape T is small (close to zero), the direction of the recording tape T (the direction in which the recording tape T moves as the tape T is wound) is not fixed and the position of the recording tape T is displaced in the vertical direction. Incidentally, FIG. 16 shows a state in which one lap or a plurality of laps of the recording tape T stick(s) out of the wound face of the recording tape T wound around the reel hub 22 due to the positional displacement of the recording tape T. Because FIG. 16 shows the wound face of the upper edge T_{A} of the recording tape T, sticking out of the recording tape T from the wound face may be seen on the lower edge side of the recording tape T, though it is not shown in the drawing.

If the amount of curvature ΔD of the recording tape T is too large, the recording tape T is excessively pushed to the lower flange 26 side to cause damage to the tape edge and the recording tape T may be wound unevenly in the radial direction of the flange, the recording tape T interferes with the upper flange 24 and the lower flange 26 during traveling of the tape and suffers damage on its edges, and also phenomena which develop into defects such as cinching may occur. Moreover, the tape traveling position excessively deviates to one side.
Therefore, it is necessary to set the amount of curvature ΔD to an appropriate value.

Table 2 shows the amount of curvature ΔD of the recording tape T and the state of the tape edges.

**[Table 2]**

| | ① Amount of curvature of recording tape (mm) | State of tape edges* |
|---|---|---|
| 1 | 0.1 | Δ |
| 2 | 0.2 | ⊚ |
| 3 | 0.5 | ⊚ |
| 4 | 1.0 | ⊚ |
| 5 | 1.5 | ⊚ |
| 6 | 2.0 | ⊚ |
| 7 | 2.5 | ○ |
| 8 | 3.0 | Δ |

| | | |
|---|---|---|
| *⊚ : Excellent ○ : Good Δ : Somewhat Good × : Poor | | |

From the results in Table 2, it is clear that no problem are observed at the tape edge if the amount of curvature ΔD of the recording tape T is in a range of 0.2 to 2.5 mm. Therefore, in the exemplary embodiment, an absolute value of the amount of curvature ΔD of the recording tape T is set to 0.2 mm to 2.5 mm. As a result, an appropriate and stable tape traveling position and a state with less winding disorder of the recording tape T may be achieved (see FIG. 15(B)). The absolute value of the amount of curvature ΔD of the recording tape T is preferably in a range of 0.2 to 2.0 mm.

With regard to curvature of the recording tape T, uniform curvature and satisfactory curl may be given to the recording tape due to a shape fixing effect of a creep phenomenon by subjecting the recording tape to appropriate heat treatment in a state in which the recording tape is wound around a reel having a reel hub with a tapered outer peripheral face, though it is not shown in the drawing. In other words, with this heat treatment, the direction of curvature of the recording tape may be changed.

The recording tape T has been becoming thinner so as to increase recording capacity per cartridge. As a result, rigidity of the recording tape T reduces and strength of the tape edges also reduces. Therefore, folding of the recording tape T caused by the one-lap sticking out and damage to the tape edges during endurance traveling become more serious than ever. In the exemplary embodiment, however, an amount of sticking out and frequency of the one-lap sticking out of the recording tape T may be reduced by suppressing the positional displacement of the recording tape T and therefore the exemplary embodiment is effective especially in a case of thin recording tape T (7.5 µm or less).

Although the recording tape T having the positive direction of curvature is used here, the recording tape T of - curvature may be used. In this case, the radius of the reel hub 22 on the upper flange 24 side is made smaller than the radius on the lower flange 26 side.

Although the reel hub 22 and the lower flange 26 are integrally molded here, the reel hub 22 may be integrally molded with the upper flange 24 or the reel hub 22, the upper flange, and the lower flange may be molded integrally. In the exemplary embodiment, it is essential only that deformations of the reel hub 22 and the lower flange 26 occur synchronously and affect each other. Therefore, besides the above integral molding, the reel hub 22 and the lower flange 26 may be welded to each other or the reel hub 22 and the lower flange 26 may be integrated by fitting.

Although a case in which the reel 20 is applied to the recording tape cartridge 10 housing the single reel has been shown in the above exemplary embodiment, the invention is not limited to it. For example, the reel 20 may be applied to a recording tape cartridge of a two-reel type in which two reels are housed.

According to a first aspect of the invention, there is provided a tape reel including a hub around which recording tape is wound and flanges integrally provided to opposite end portions of the hub, wherein radii on a first end and the second end of the hub are different from each other and the recording tape is wound in such a manner that the recording tape edge having a smaller radius of curvature is on a small-diameter side of the hub.

If the hub and the flanges are formed integrally, deformation of the hub due to winding and tightening of the recording tape affects the flanges provided to the opposite end portions of the hub and reduces an interval between the flanges. In other words, "to be integral" refers to a structure in which deformations of the hub and the flanges occur synchronously and affect each other. In such structures as the hub and the flanges are molded integrally and the flanges are welded to the hub, the flanges are deformed as the hub is deformed or the hub is deformed as the flanges are deformed.

In the hub integrated with the flanges and having a difference between the radii at its opposite end portions as described above,
1)Because the surface pressure distribution of the hub due to the recording tape is greater on the large-diameter side of the hub than on the small-diameter side of the hub, the amount of deformation of the flange deformed due to winding and tightening of the recording tape is larger on the large-diameter side of the hub than on the small-diameter side of the hub and the recording tape is wound while deviating to the flange on the small-diameter side of the hub.
2)When the recording tape is wound while applied with tension in a direction substantially perpendicular to the axis of the hub, the recording tape is wound while deviating toward the flange on the small-diameter side of the hub due to deviation of the distribution of the surface pressure acting on the recording tape.
3)When the recording tape is wound around the hub in such a manner that the side having the smaller radius of curvature of the tape edge is on the small-diameter side of the hub, the recording tape moves to a direction toward the small-diameter side of the hub.
In other words, according to the above aspect, the recording tape may be wound on the side of the flange on the small-diameter side of the hub due to synergy among 1) to 3).

Therefore, displacement of the recording tape in the axial direction of the hub may be suppressed, winding disorder of the recording tape may be suppressed, and the regular winding may be realized. As a result, occurrence of sticking out of one lap or a plurality of laps of the recording tape from the wound face of the tape wound around the hub and unevenness may be suppressed. Problems, caused by a drop impact, that the sticking-out lap of the recording tape collides with the flange and is folded or the tape edge is damaged may be reduced. Therefore, servo tracking error that occurs during traveling of the tape may be reduced and recording and reproducing errors of information may be prevented.

Moreover, positional displacement of the recording tape in the vertical direction (axial direction of the hub) may be suppressed during traveling of the recording tape in the drive device and the tape traveling position may be stabilized. Therefore, reading errors of the servo signals and recording and reproducing errors of recording signals may be reduced even in a case of high-density recording. As a result, reduction of so-called position error signals and off-track errors may be expected.

In the above aspect, a ratio of a difference between the radii on the first end and the second end of the hub to a width of the recording tape may be 0.0004 and 0.0032.

If the ratio of the difference between the radii on the first end and the second end of the hub to the width of the recording tape is close to zero (in a case of a substantially cylindrical hub), an effect of moving the recording tape to be wound to the small-diameter side of the hub may not be obtained. On the other hand, if the ratio of the difference between the radii on the first end and the second end of the hub to the width of the recording tape is too large, the recording tape is excessively pushed to a flange face on the small-diameter side of the hub to cause damage to the tape edge and the recording tape T may be wound unevenly in the radial direction of the flange, the recording tape interferes with the flanges during traveling and suffers damage on its edges, and also phenomena which develop into defects such as cinching may occur.

Therefore, in the above aspect, the ratio of the difference between the radii on the first end and the second end of the hub to the width of the recording tape is specified. It is preferable that the ratio of the difference between the radii on the first end and the second end of the hub to the width of the recording tape is in a range of 0.0004 to 0.0032. It is preferable that the ratio of the difference between the radii on the first end and the second end of the hub to the width of the recording tape is in a range of 0.0008 to 0.0020.

If the ratio of the difference between the radii on the first end and the second end of the hub to the width of the recording tape is in the range of 0.0008 to 0.0020, the recording tape is not excessively pushed against the flange face on the small-diameter side of the hub or does not interfere with the flange even if the radius of curvature of the tape edge of the recording tape is small (an amount of curvature of the recording tape is large).

Therefore, if the amount of curvature of the recording tape is small (0.5 mm or more and 2.0 mm or less), the ratio of the difference between the radii on the first end and the second end of the hub to the width of the recording tape in the range of 0.0004 to 0.0032 sufficiently works in consideration of productivity of the tape reel and designing flexibility.

In the above aspect, the width of the recording tape may be approximately 12.65 mm and the difference between the radii on the first end and the second end of the hub may be 5 µm to 40 µm.

If the difference between the radii on the first end and the second end of the hub is close to zero (in the case of the substantially cylindrical hub), the effect of moving the recording tape to be wound to the small-diameter side of the hub may not be obtained. On the other hand, if the difference between the radii on the first end and the second end of the hub is too large, the recording tape is excessively pushed to the flange face on the small-diameter side of the hub to cause damage to the tape edge and uneven winding of the recording tape, the recording tape interferes with the flanges during traveling of the tape and suffers damage on its edges, and also phenomena which develop into defects such as cinching may occur.

Therefore, in the case in which the width of the recording tape is approximately 12.65 mm, the difference between the radii on the first end and the second end of the hub is 5 µm to 40 µm. It is preferable that the difference between the radii on the first end and the second end of the hub is 10 µm to 25 µm.

In the case in which the width of the recording tape is approximately 12.65 mm, if the difference between the radii on the first end and the second end of the hub is in the range of 10 µm to 25 µm, the recording tape is not excessively pushed against the flange face on the small-diameter side of the hub or does not interfere with the flange even if the radius of curvature of the tape edge of the recording tape is small (the amount of curvature of the recording tape is large).

Therefore, if the amount of curvature of the recording tape is small (0.5 mm to 2.0 mm), the difference between the radii on the first end and the second end of the hub in the range of 5 µm to 40 µm sufficiently works in the case of the recording tape of the width of about 12.65 mm in consideration of productivity of the tape reel and designing flexibility.

In the above aspect, an absolute value of an amount of curvature of the recording tape may be 0.2 mm to 2.5 mm.

According to the above aspect, by setting the absolute value of the amount of curvature of the recording tape in the range of 0.2 mm to 2.5 mm, the recording tape is not excessively pushed against the flange face on the small-diameter side of the hub or does not interfere with the flange due to large curvature.

In other words, damage to the tape edge and uneven winding in the radial direction of the flange of the recording tape may be prevented, the recording tape may be prevented from interfering with the flange on the small-diameter side of the hub during traveling and from suffering damage on its edges, and also phenomena which develop into defects such as cinching may be prevented and an appropriate and stable tape traveling position and a state with less winding disorder may be achieved.

It is preferable that the absolute value of the amount of curvature of the recording tape is in the range of 0.5 mm to 2.0 mm, because the recording tape may be wound around the hub while the tape edge deviates to a proper degree to the flange side and damage to the tape edges during endurance traveling is suppressed. By the "amount of curvature" is meant the distance between a reference line and the mid-point of an edge in the width of the recording tape having a length of 1.0 mm. The reference line connects opposite end portions of the recording tape of a length of 1.0 mm.

In the above aspect, the thickness of the recording tape may be 7.5 µm or less.

If the thickness of the recording tape is large, rigidity of the recording tape increases and therefore strength of the tape edges also increases. As a result, problems such as damage to the tape edges become less likely to be caused by the same degree of pushing, impact, friction, and wearing. On the other hand, if the thickness of the recording tape reduces, distribution of stress acting in the width direction of the recording tape when the recording tape is wound while the same tension is applied changes though the width of the recording tape is the same. Therefore, in the aspect, the thickness of the recording tape that is effective in application of the invention is specified.

In the above aspect, the servo signals which become references for tracking by the recording and reproducing head of the drive device may be recorded in advance on the recording tape.

According to the above aspect, by recording the servo signals in advance on the recording tape, the recording and reproducing head follows while using the servo signals as guides. According to the recording tape of the first aspect, the tape traveling position may be stabilized. Therefore, position error signals, servo tracking errors, recording and reproducing errors of the recording signals may be reduced.

According to a second aspect of the invention, there is provided a recording tape cartridge including the tape reel of the first aspect and a case in which the tape reel is rotatably housed.

According to the above aspect, substantially the same effects as those of the tape reel of the first aspect of the invention may be obtained. Especially, the recording tape has becoming thinner so as to increase recording capacity per recording tape cartridge. As a result, rigidity of the recording tape reduces and strength of the tape edges also reduces. However, frequency and an amount of sticking out of the recording tape from the wound face may be reduced and therefore the tape edges are less likely to be damaged even if the thin recording tape is used.

In the above aspect, the recording tape cartridge has a single tape reel configuration.

According to the above aspect, in the reel, the regular winding of the recording tape is realized and the positional displacement of the recording tape in the axial direction of the hub (the direction perpendicular to the traveling direction of the recording tape) during traveling may be suppressed. Therefore, the displacement of the recording tape in the width direction (the direction perpendicular to the traveling direction of the recording tape) around the reel of the cartridge caused by the take-up reel of the drive device may be suppressed. As a result, the recording tape cartridge is suitable for data backup for a computer, requiring high recording capacity, and having one reel.

According to the third aspect of the invention, there is provided a take-up reel which is provided in the drive device and around which the recording tape which has been drawn out of the recording tape cartridge is wound. The take-up reel includes the hub around which the recording tape drawn out of the recording tape cartridge is wound and the flange integrally provided to the opposite end portions of the hub. The radii on the first end and the second end of the hub are different from each other and the side of the recording tape having the smaller radius of curvature of the tape edge is wound on the small-diameter side of the hub.

According to the above aspect, the take-up reel has substantially the same effects as the tape reel of the first aspect of the invention. In other words, in the case where the hub and the flanges of the take-up reel are formed integrally, if the hub is deformed due to winding and tightening of the recording tape, the flanges provided to the opposite end portions of the hub are affected and the interval between the flanges is reduced.

Here, "to be integral" refers to the structure in which deformations of the hub and the flanges occur synchronously and affect each other. In other words, in such a structure as the hub and the flanges are molded integrally and a case where the flanges are welded to the hub, the flanges are deformed as the hub is deformed or the hub is deformed as the flanges are deformed.

In the hub integrated with the flanges and having a difference between the radii at its opposite end portions as described above,
1)Because the surface pressure distribution of the hub due to the recording tape is greater on the large-diameter side of the hub than on the small-diameter side of the hub, the amount of deformation of the flange deformed due to winding and tightening of the recording tape is larger on the large-diameter side of the hub than on the small-diameter side of the hub and the recording tape is wound while deviating to the flange on the small-diameter side of the hub.
2)When the recording tape is wound while applied with tension in a direction substantially perpendicular to the axis of the hub, the recording tape is wound while deviating toward the flange on the small-diameter side of the hub due to deviation of the distribution of the surface pressure acting on the recording tape.
3)When the recording tape is wound around the hub in such a manner that the side having the smaller radius of curvature of the tape edge is on the small-diameter side of the hub, the recording tape moves to a direction toward the small-diameter side of the hub.
In other words, according to the above aspect, the recording tape may be wound on the side of the flange on the small-diameter side of the hub due to synergy among 1) to 3).

Therefore, displacement of the recording tape in the axial direction of the hub (the direction perpendicular to the traveling direction of the recording tape) may be suppressed, winding disorder of the recording tape may be suppressed, and the regular winding may be realized. As a result, occurrence of sticking out of one lap or a plurality of laps of the recording tape from the wound face of the tape wound around the hub and unevenness may be suppressed. Problems, caused by a drop impact, that the sticking-out lap of the recording tape collides with the flange and is folded or the tape edge is damaged may be reduced. Therefore, servo tracking error that occurs during traveling of the tape may be reduced and recording and reproducing errors of information may be prevented.

Moreover, positional displacement of the recording tape in the vertical direction (axial direction of the hub) may be suppressed during traveling of the recording tape in the drive device and the tape traveling position may be stabilized. Therefore, reading errors of the servo signals and recording and reproducing errors of recording signals by the recording and reproducing head may be reduced even in a case of high-density recording. Reduction of so-called position error signals and off-track errors may be expected. Moreover, damage to the tape edge caused by excessive contact with flanges of the tape guides or the take-up reel provided in the drive device and the flanges of the tape reel may be prevented.

In the above aspect, the ratio of the difference between the radii on the first end and the second end of the hub to the width of the recording tape to be wound may be 0.0004 and 0.0032.

According to the above aspect, the take-up reel has substantially the same effects as the tape reel of the first aspect of the invention. In other words, if the ratio of the difference between the radii on the first end and the second end of the hub to the width of the recording tape to be wound is close to zero (in a case of a substantially cylindrical hub), an effect of moving the recording tape to be wound to the small-diameter side of the hub may not be obtained.

On the other hand, if the ratio of the difference between the radii on the first end and the second end of the hub to the width of the recording tape to be wound is too large, the recording tape is excessively pushed to a flange face on the small-diameter side of the hub to cause damage to the tape edge and the recording tape may be wound unevenly in the radial direction of the flange, the recording tape interferes with the flanges during traveling of the tape and suffers damage on its edges, and also phenomena which develop into defects such as cinching may occur.

Therefore, in the above aspect, the ratio of the difference between the radii on the first end and the second end of the hub to the width of the recording tape is specified. The ratio of the difference between the radii on the first end and the second end of the hub to the width of the recording tape is in a range of 0.0004 to 0.0032. It is more preferable that the ratio of the difference between the radii on the first end and the second end of the hub to the width of the recording tape is in a range of 0.0008 to 0.0020.

If the ratio is in the range of 0.0008 to 0.0020, the recording tape is not excessively pushed against the flange face on the small-diameter side of the hub or does not interfere with the flange even if the radius of curvature of the tape edge of the recording tape is small (an amount of curvature of the recording tape is large).

Therefore, if the amount of curvature of the recording tape is small (0.5 mm or more and 2.0 mm or less), the ratio of the difference between the radii on the first end and the second end of the hub to the width of the recording tape in the range of 0.0004 to 0.0032 sufficiently works in consideration of productivity of the tape reel and designing flexibility.

In the above aspect, the width of the recording tape to be wound may be approximately 12.65 mm and the difference between the radii on the first end and the second end of the hub may be 5 µm to 40 µm.

According to the above aspect, the take-up reel has substantially the same effects as the tape reel of the first aspect of the invention. In other words, if the difference between the radii on the first end and the second end of the hub is close to zero (in the case of the substantially cylindrical hub), the effect of moving the recording tape to be wound to the small-diameter side of the hub may not be obtained. On the other hand, if the difference between the radii on the first end and the second end of the hub is too large, the recording tape is excessively pushed to the flange face on the small-diameter side of the hub to cause damage to the tape edge and the recording tape may be wound unevenly in the radial direction of the flange, the tape interferes with the flanges during traveling and suffers damage on its tape edges, and also phenomena which develop into defects such as cinching may occur.

Therefore, in the above aspect, in the case in which the width of the recording tape is approximately 12.65 mm, the difference between the radii on the first end and the second end of the hub is 5 µm to 40 µm. It is more preferable that the difference between the radii on the first end and the second end of the hub is 10 µm to 25 µm.

In the case in which the width of the recording tape is approximately 12.65 mm, when the difference between the radii on the first end and the second end of the hub is in the range of 10 µm to 25 µm, the recording tape is not excessively pushed against the flange face on the small-diameter side of the hub or does not interfere with the flange even if the radius of curvature of the tape edge of the recording tape is small (the amount of curvature of the recording tape is large).

Therefore, when the amount of curvature of the recording tape is small (0.5 mm or more and 2.0 mm or less), the difference between the radii on the first end and the second end of the hub in the range of 5 µm to 40 µm sufficiently works in the case of the recording tape of the width of about 12.65 mm in consideration of productivity of the tape reel and designing flexibility.

In the above aspect, an absolute value of an amount of curvature of the recording tape may be 0.2 mm to 2.5 mm.

According to the above aspect, the take-up reel has substantially the same effects as the tape reel of the first aspect of the invention. In other words, by setting the absolute value of the amount of curvature of the recording tape in the range of 0.2 mm to 2.5 mm, the recording tape is not excessively pushed against the flange side or does not interfere with the flange due to large curvature.

In other words, damage to the tape edge and uneven winding in the radial direction of the flange of the recording tape may be prevented, the recording tape may be prevented from interfering with the flange on the small-diameter side of the hub during traveling and from suffering damage on its edges, and also phenomena which develop into defects such as cinching may be prevented and an appropriate and stable tape traveling position and a state with less winding disorder may be achieved.

It is preferable that the absolute value of the amount of curvature of the recording tape is in the range of 0.5 mm to 2.0 mm, because the recording tape may be wound around the hub while the tape edge deviates to a proper degree to the flange side and damage to the tape edges during endurance traveling is suppressed. By the "amount of curvature" is meant the distance between a reference line and a mid-point of an edge in the width of the recording tape having a length of 1.0 mm. The reference line connects opposite end portions of the recording tape of a length of 1.0 mm.

In the above aspect, a thickness of the recording tape may be 7.5 µm or less.

According to the above aspect, the take-up reel has substantially the same effects as the tape reel of the first aspect of the invention. In other words, if the thickness of the recording tape is large, rigidity of the recording tape increases and therefore strength of the tape edges also increases. As a result, problems such as damage to the tape edges become less likely to be caused by the same degree of pushing, impact, friction, and wearing. On the other hand, if the thickness of the recording tape reduces, distribution of stress acting in the width direction of the recording tape when the recording tape is wound while the same tension is applied changes though the width of the recording tape is the same. Therefore, in the above aspect, the thickness of the recording tape that is effective in application is specified.

In the above aspect, the servo signals which become references for tracking by the recording and reproducing head of the drive device may be recorded in advance on the recording tape.

According to the above aspect, the take-up reel has substantially the same effects as the tape reel of the first aspect of the invention. In other words, by recording the servo signals in advance on the recording tape, the recording and reproducing head follows while using the servo signals as guides. By stabilizing the tape traveling position, position error signals, servo tracking errors, recording and reproducing errors of the recording signals may be reduced.

According to a fourth aspect of the invention, there is provided a drawing-out member that draws the recording tape out of the recording tape cartridge, the drawing-out member being housed in the hub of the take-up reel of the third aspect of the invention, and including the winding face forming a part of the outer peripheral face of the hub, wherein radii on a first end and a second end of the winding face are different from each other and the winding face of the drawing-out member and the outer peripheral face of the hub become substantially flush with each other when the drawing-out member is housed in the hub.

Here, if a difference in level is created between the winding face of the drawing-out member and the outer peripheral face of the hub, deformation of the recording tape T is caused by the difference in level when the recording tape is wound around the hub of the take-up reel and there is a possibility that data may not be recorded or read at the portion.

According to the above aspect, however, because the radii on the first end and the second end of the winding face of the drawing-out member forming a part of the outer peripheral face of the hub of the take-up reel are different from each other and the winding face of the drawing-out member and the outer peripheral face of the hub are substantially flush with each other when the drawing-out member is housed in the hub, the difference in level is not formed throughout the outer peripheral face of the hub. Therefore, effects substantially the same as those of the take-up reel of the third aspect of the invention may be obtained.

According to a fifth aspect of the invention, there is provided the drive device including the recording and reproducing head and the take-up reel of the third aspect of the invention around which the recording tape drawn out of the recording tape cartridge is wound.

According to the above aspect, the drive device has substantially the same effects as the tape reel of the first aspect of the invention. In other words, positional displacement of the recording tape in the vertical direction (axial direction of the hub) may be suppressed during traveling of the recording tape in the drive device and the tape traveling position may be stabilized. Therefore, reading errors of the servo signals and recording and reproducing errors of recording signals by the recording and reproducing head may be reduced even in a case of high-density recording. Reduction of so-called position error signals and off-track errors may be expected.

Moreover, damage to the tape edge caused by excessive contact with flanges of the tape guides and the take-up reel provided in the drive device and the flanges of the tape reel may be prevented. In other words, damage to the tape edge and uneven winding of the recording tape around the hub may be prevented, the recording tape may be prevented from interfering with the flange during traveling and from suffering damage on its edges, and also phenomena which develop into defects such as cinching may be prevented and an appropriate and stable tape traveling position and a state with less winding disorder may be achieved.

In the above aspect, the drawing-out member of the fourth aspect of the invention may be provided.

According to the above aspect, the drive device has substantially the same effects as the drawing-out member of the fourth aspect of the invention. In other words, because the radii on the first end and the second end of the winding face of the drawing-out member forming a part of the outer peripheral face of the hub of the take-up reel are different from each other and the winding face of the drawing-out member and the outer peripheral face of the hub are substantially flush with each other when the drawing-out member is housed in the hub, the difference in level is not formed throughout the outer peripheral face of the hub. Therefore, deformation of the recording tape that is caused by the difference in level when the recording tape is wound around the hub of the take-up reel is less likely to occur.

As described above, according to the invention, with the hub having the difference between the radii of its first end and second end, displacement of the recording tape in the axial direction of the hub during traveling may be suppressed and one-lap sticking out and winding disorder of the wound recording tape may be suppressed. Problems, caused by a drop impact, that the sticking-out lap of the recording tape collides with the flange and is folded or the tape edge is damaged may be reduced. Moreover, occurrence of reading errors of the servo signals and recording and reproducing errors of data signals may be reduced.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A tape reel comprising:
a hub around which recording tape is wound; and
flanges integrally provided to opposite end portions of the hub,
wherein radii on a first end and a second end of the hub are different from each other, and the recording tape is wound in such a manner that the recording tape edge having a smaller radius of curvature is on the small-diameter side of the hub.

2. The tape reel of claim 1, wherein a ratio of a difference between the radii on the first end and the second end of the hub to a width of the recording tape is 0.0004 to 0.0032.

3. The tape reel of claim 1, wherein the width of the recording tape is approximately 12.65 mm and a difference between the radii on the first end and the second end of the hub is 5 µm to 40 µm.

4. The tape reel of any one of claims 1 to 3, wherein an absolute value of an amount of curvature of the recording tape is 0.2 mm to 2.5 mm.

5. The tape reel of any one of claims 1 to 4, wherein a thickness of the recording tape is 7.5 µm or less.

6. The tape reel of any one of claims 1 to 5, wherein servo signals, which become references for tracking by a recording and reproducing head of a drive device, are recorded in advance on the recording tape.

7. A recording tape cartridge comprising the tape reel of any one of claims 1 to 6 and a case in which the tape reel is rotatably housed.

8. The recording tape cartridge of claim 7, comprising a single tape reel configuration.

9. A take-up reel which is provided in a drive device and around which recording tape that has been drawn out of a recording tape cartridge is wound, the take-up reel comprising:
a hub around which the recording tape is wound and flanges integrally provided to opposite end portions of the hub,
wherein radii on a first end and a second end of the hub are different from each other, and the recording tape is wound in such a manner that the recording tape edge having a smaller radius of curvature is wound on the small-diameter side of the hub.

10. The take-up reel of claim 9, wherein a ratio of a difference between the radii on the first end and the second end of the hub to a width of the recording tape to be wound is 0.0004 to 0.0032.

11. The take-up reel of claim 9, wherein the width of the recording tape to be wound is approximately 12.65 mm and a difference between the radii on the first end and the second end of the hub is 5 µm to 40 µm.

12. The take-up reel of any one of claims 9 to 11, wherein an absolute value of an amount of curvature of the recording tape to be wound is 0.2 mm to 2.5 mm.

13. The take-up reel of any one of claims 9 to 12, wherein a thickness of the recording tape to be wound is 7.5 µm or less.

14. The take-up reel of any one of claims 9 to 13, wherein servo signals, which become references for tracking by a recording and reproducing head of a drive device, are recorded in advance on the recording tape.

15. A drawing-out member for drawing recording tape out of a recording tape cartridge, the drawing-out member being housed in the hub of the take-up reel of any one of claims 9 to 14, and comprising a winding face forming a part of an outer peripheral face of the hub, wherein radii on a first end and a second end of the winding face are different from each other, and the winding face and the outer peripheral face of the hub become substantially flush with each other when the drawing-out member is housed in the hub.

16. A drive device comprising a recording and reproducing head and the take-up reel of any one of claims 9 to 14 around which recording tape drawn out of the recording tape cartridge is wound.

17. The drive device of claim 16 further comprising the drawing-out member of claim 15.
